# EUROPEAN PATENT SPECIFICATION

(11) **EP 2 651 235 B1**
(45) Date of publication and mention of the grant of the patent: **17.09.2014**
(21) Application number: 11781554.8
(22) Date of filing: 14.11.2011
(51) Int. Cl.: A23F 3/06, A23F 3/16, A23F 3/20

(54) **TEA-BASED BEVERAGE**
GETRÄNK AUF TEEBASIS
BOISSON A BASE DE THE

(30) Priority: 16.12.2010 EP 10195311
(43) Date of publication of application: 23.10.2013
(73) Proprietor: Unilever PLC, London, Greater London EC4Y 0DY (GB); Unilever N.V., 3013 AL Rotterdam (NL)
(72) Inventor: MUTAI, Felix, Kipkorir, Kericho 20200 (KE); NEELY, Theresa, Jane, Bedford Bedfordshire MK44 1LQ (GB); SHARP, David, George, Bedford Bedfordshire MK44 1LQ (GB)
(74) Representative: Askew, Sarah Elizabeth
(86) International application number: PCT/EP2011/070006
(87) International publication number: WO 2012/079876

(56) References cited:
- WO-A2-2009/059927
- SHU, W. S. ET AL: "Fluoride and aluminium concentrations of tea plants and tea products from Sichuan Province, PR China", CHEMOSPHERE, vol. 52, September 2003 (2003-09), pages 1475-1482, XP002642438, cited in the application
- KARAK, T. ; BHAGAT, R. M.: "Trace elements in tea leaves, made tea and tea infusion: A review", FOOD RESEARCH INTERNATIONAL, vol. 43, November 2010 (2010-11), pages 2234-2252, XP002642439, cited in the application
- DATABASE WPI Week 200647 Thomson Scientific, London, GB; AN 2006-454783 XP002637989, & CN 1 718 030 A (LANCANGJIANG BEER ENTERPRISE CO LTD) 11 January 2006 (2006-01-11)

## Description

### TECHNICAL FIELD OF THE INVENTION

The present invention relates to a tea-based beverage, precursors for diluting to prepare the beverage and processes for manufacturing the precursor and/or beverage. In particular the present invention relates to tea-based beverages comprising expressed tea juice.

### BACKGROUND TO THE INVENTION

Tea is a beverage traditionally made by infusing the dry leaves of the plant *Camellia sinensis* in boiling water. Tea is (with the exception of water) probably the world's most popular beverage and, in some parts of the world, has traditionally been considered to have health-promoting potential.

Although many of the components of tea are beneficial to health, it is desirable to control the amounts of certain components which have a relatively low recommended daily intake. For example, it is desirable that the amounts of dietary aluminium and/or fluoride are not excessively influenced by consumption of tea. Thus there have been several studies investigating the contents of these minerals in tea plants and products (see, for example, W. S. Shu et al., "Fluoride and aluminium concentrations of tea plants and tea products from Sichuan Province, PR China", Chemosphere [2003], 52, pp. 1475-1482; R. Street et al., "Total content and speciation of aluminium in tea leaves and tea infusions", Food Chemistry [2007], 104, pp. 1662-1669; or T. Karak et al., "Trace elements in tea leaves, made tea and tea infusion: A preview", Food Research International [2010], 43, pp. 2234-2252).

Juice expressed from tea has properties different from conventional tea extracts. For example it may have a delicate, fresh taste and/or be low in caffeine and/or have distinct ratios of gallated and non-gallated polyphenols (see, for example, the tea juices described in WO 2009/059927 [Unilever]).

We have now unexpectedly found that in the expression process significant amounts of aluminium and fluoride can be pressed out with the juice such that the tea solids in tea juice may contain relatively more aluminium and fluoride than some conventional tea extracts. This is especially problematic as in order to obtain tea beverages having the best organoleptic properties provided by expressed juice, the tea solids from the juice may be required to be compounded in the beverage at high levels. Thus we have recognised that there is a problem in providing beverages based on expressed tea juice but which can be consumed in conventional quantities by regular consumers. We have solved this problem by developing tea-based beverages that contain expressed tea juice but which have specific levels of aluminium and or fluoride.

### DEFINITIONS

### Tea

'Tea" for the purposes of the present invention means material from *Camellia sinensis.*

"Leaf tea" for the purposes of this invention means a tea product that contains tea leaves and/or tea stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the tea material. During this process colourless catechins in the material are converted to a complex mixture of yellow and orange to dark-brown polyphenolic substances.

"Fresh tea material" refers to tea stem and/or a mixture of tea leaves and stem, that has never been dried to a water content of less than 30% by weight, and usually has a water content in the range 60 to 90%.

### Tea-Based Beverage

As used herein, the term "tea-based beverage" refers to a beverage comprising at least 0.05% tea solids by weight of the beverage.

### Expressing Juice

As used herein the term "expressing juice" refers to squeezing out juice from fresh tea material using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh tea material during the expression step. However, in order to prevent significant extraction of tea solids by the solvent, the moisture content of the leaves during expression is preferably that of fresh tea material as defined hereinabove. In other words, during the expression step, the moisture content of the tea material is preferably between 30 and 90% by weight, more preferably between 60 and 90%. It is also preferred that the fresh tea material is not contacted with non-aqueous solvent (e.g. alcohols) prior to or during expression, owing to the environmental & economic problems associated with such solvents.

### Aluminium

The amount of aluminium in a given sample is the total amount of aluminium, whether in the form of ions (e.g. Al³⁺), compounds, complexes or other forms. This can suitably be measured by ICP-AES (Inductively Coupled Plasma - Atomic Emission Spectroscopy) following digestion with nitric acid.

### Fluoride

The amount of fluoride (F⁻) in a given sample is the total fluoride that is releasable by acid hydrolysis. This can suitably be measured with an ion-selective electrode following hydrolysis with perchloric acid.

### Miscellaneous

Except in the examples, or where otherwise explicitly indicated, all numbers in this description indicating amounts of material or conditions of reaction, physical properties of materials and/or use may optionally be understood as modified by the word "about".

All amounts are by weight of the final beverage or composition, unless otherwise specified.

Where amounts are specified in terms of ppm of a liquid, this refers to mg per litre of the liquid. Where amounts are specified in terms of ppm of a solid composition, this refers to mg per kg of the composition.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

### SUMMARY OF THE INVENTION

In a first aspect, the present invention provides a tea-based beverage comprising expressed tea juice, wherein the beverage has a total aluminium content of less than 8 ppm; a total fluoride content of less than 8 ppm; or both.

In a second aspect, the present invention provides a beverage precursor composition for diluting to prepare the beverage of the first aspect, wherein the composition comprises expressed tea juice, has a total tea solids content of at least 4% by weight of the composition, and wherein the composition has a total aluminium content of less than 150 ppm; a total fluoride content of less than 150 ppm; or both.

In a third aspect, the present invention provides a process suitable for preparing tea juice for use in the first two aspects, the process comprising the steps of:
a) providing fresh tea material; and
b) expressing juice from the fresh tea material thereby to produce tea residue and tea juice;
wherein the fresh tea material comprises: at least 50% by weight of tea material harvested from tea plants pruned within 2 years before harvesting; greater than 1250 shoots per kg of the material; or both.

### DETAILED DESCRIPTION

### The Beverage

The beverage of the present invention is tea-based and, despite comprising expressed tea juice, the beverage has a total aluminium content of less than 8 ppm and/or a total fluoride content of less than 8 ppm. Thus the beverage provides the organoleptic benefits provided by tea juice but is suitable for regular consumption without excessively influencing the amounts of dietary aluminium and/or fluoride.

The total amount of aluminium is preferably less than 6 ppm, more preferably less than 5 ppm, more preferably still less than 4 ppm and most preferably less than 3 ppm. Similarly the total amount of fluoride is preferably less than 6 ppm, more preferably less than 5 ppm, more preferably still less than 4 ppm and most preferably less than 3 ppm.

It is preferred that the beverage is kept as natural as possible and in this respect complete demineralisation of the tea solids is not preferred. Thus it is preferred that the total amount of aluminium is at least 0.1 ppm, more preferably at least 0.2 ppm and most preferably at least 0.3 ppm. Similarly it is preferred that the total amount of fluoride is at least 0.1 ppm, more preferably at least 0.2 ppm and most preferably at least 0.3 ppm.

The beverage of the present invention has low levels of aluminium and/or fluoride even though it contains significant amounts of tea solids. Preferably the beverage comprises tea solids in a total amount of at least 0.1% by weight of the beverage, more preferably at least 0.2% and most preferably from 0.25 to 1%. Additionally or alternatively, the beverage preferably has a ratio of the total aluminium content to the total amount of tea solids of less than 2.2 mg aluminium per g of tea solids, more preferably less than 2.0 mg per g, more preferably still less than from 0.3 to 1.9 mg per g.

The beverage comprises expressed tea juice. Owing to the unique organoleptic properties of tea juice it is preferred that at least 50% by weight of the tea solids are provided by the tea juice, more preferably at least 75% and most preferably from 90 to 100%.

The beverage may comprise black tea juice, green tea juice or a combination thereof.

Tea juices tend to have a lower proportion of gallated species in the polyphenols than conventional tea extracts.

Where the beverage comprises black tea juice, the beverage preferably comprises theaflavins and the weight ratio of theaflavin (TF1) to theaflavin digallate (TF4) is at least 2.0, more preferably at least 3.0, more preferably still at least 3.2 and most preferably from 3.5 to 5.0. Additionally or alternatively the amount of TF1 in the total theaflavins in the beverage is preferably at least 40% by weight, more preferably at least 42% by weight and most preferably from 45 to 60%. Suitable methods for determining theaflavin contents can be found, for example in the International patent application published as WO 2009/059927 (Unilever).

Where the beverage comprises green tea juice, the beverage preferably comprises catechins and has a weight ratio of non-gallated catechins to gallated catechins of greater than 1.4:1, more preferably greater than 1.6:1, more preferably still greater than 1.8:1 and most preferably from 3:1 to 20:1. Methods of measuring gallated and neon-gallated catechin contents can be found, for example in the International patent application published as WO 2010/037768 (Unilever).

Surprisingly we have found that there is a high degree of correlation of the aluminium and the fluoride content in expressed tea juice. Thus the tea-based beverage preferably has a weight ratio of the total aluminium content to the total fluoride content of between 3:1 to 1:3, more preferably in the range 2:1 to 1:2 and most preferably in the range 2:1 to 1:1.

The beverage will typically have a water content of at least 85% by weight of the beverage. More preferably the beverage comprises at least 90% water and most preferably from 95 to 99.9% water by weight of the beverage.

In addition to tea solids and water the beverage may optionally comprise one or more auxiliary ingredients such as a flavour, sweetener, acidulant, preservative, stabiliser or combination thereof.

### The Beverage Precursor

The beverage precursor composition is suitable for dilution with an aqueous liquid to provide the beverage of the invention and so the precursor composition comprises tea solids in an amount of at least 4% by weight of the composition. Despite this high level of tea solids, however, the composition has a total aluminium content of less than 150 ppm and/or a total fluoride content of less than 150 ppm.

The total amount of aluminium is preferably less than 140 ppm, more preferably less than 120 ppm, more preferably still less than 100 ppm and most preferably less than 90 ppm. Similarly the total amount of fluoride is preferably less than 140 ppm, more preferably less than 120 ppm, more preferably still less than 100 ppm and most preferably less than 90 ppm.

It is preferred that the beverage precursor is kept as natural as possible and in this respect complete demineralisation of the tea solids is not preferred. Thus it is preferred that the total amount of aluminium is at least 10 ppm, more preferably at least 20 ppm and most preferably at least 30 ppm. Similarly it is preferred that the total amount of fluoride is at least 10 ppm, more preferably at least 20 ppm and most preferably at least 30 ppm.

The beverage precursor of the present invention has low levels of aluminium and/or fluoride even though it contains significant amounts of tea solids. Preferably the composition comprises total tea solids in an amount of at least 5% by weight of the composition, more preferably at least 6%. Preferably the amount of tea solids is not too high otherwise stability or portionability may be adversely affected. Thus it is preferred that the composition comprises less than 20% tea solids by weight of the composition, more preferably less than 15% and most preferably less than 10%. Additionally or alternatively, the beverage precursor preferably has a ratio of the total aluminium content to the total amount of tea solids of less than 2.2 mg aluminium per g of tea solids, more preferably less than 2.0 mg per g, more preferably still less than from 0.3 to 1.9 mg per g.

The beverage precursor comprises expressed tea juice. Owing to the unique organoleptic properties of tea juice it is preferred that at least 50% by weight of the tea solids are provided by the tea juice, more preferably at least 75% and most preferably from 90 to 100%.

The beverage precursor may be in any form and may, for example be a powder or granular composition. More preferably the precursor composition is a liquid. The tea juice itself is particularly suitable as a beverage precursor liquid and so in a most preferred embodiment the beverage precursor composition is (or consists essentially of) expressed tea juice. However, in some embodiments it may be desirable to include auxiliary ingredients in the precursor composition such as flavours, diluents (e.g. water), biopolymers or combinations thereof.

The beverage precursor may comprise black tea juice, green tea juice or a combination thereof.

Where the beverage precursor composition comprises black tea juice, the composition preferably comprises theaflavins and the weight ratio of theaflavin (TF1) to theaflavin digallate (TF4) is at least 2.0, more preferably at least 3.0, more preferably still at least 3.2 and most preferably from 3.5 to 5.0. Additionally or alternatively the amount of TF1 in the total theaflavins in the composition is preferably at least 40% by weight, more preferably at least 42% by weight and most preferably from 45 to 60%.

Where the beverage precursor composition comprises green tea juice, the composition preferably comprises catechins and has a weight ratio of non-gallated catechins to gallated catechins of greater than 1.4:1, more preferably greater than 1.6:1, more preferably still greater than 1.8:1 and most preferably from 3:1 to 20:1.

Surprisingly we have found that there is a high degree of correlation of the aluminium and the fluoride content in expressed tea juice. Thus the beverage precursor composition preferably has a weight ratio of the total aluminium content to the total fluoride content of between 3:1 to 1:3, more preferably in the range 2:1 to 1:2 and most preferably in the range 2:1 to 1:1.

The beverage precursor composition is preferably packaged, by which is meant that the composition is contained within a sealed package. In particular the package is sealed to ensure that the package is impermeable to microbiological contaminants by which is meant that the packaged product can be stored for at least 6 months at a temperature of 20 °C without the amount of spore-forming bacteria (*Bacillus* and *Clostridia* spp) in the composition increasing above 100 cfu / ml. Suitable packages include sachets, capsules, cartons or bottles.

The package preferably contains a unit dose of the beverage precursor composition for dilution to prepare a beverage. In this respect the amount of beverage precursor in the package is preferably from 4 to 18 g, more preferably from 5 to 15 g and most preferably from 6 to 14 g.

In a still further aspect the present invention provides a method for preparing a beverage by contacting the beverage precursor composition with a diluent liquid (preferably water). The beverage precursor composition is preferably contacted with the diluent liquid in a weight ratio of from 1:5 to 1:50, more preferable from 1:10 to 1:40 and most preferably from 1:15 to 1:35.

### The Process

The expressed tea juice for use in the beverage and beverage precursor of the present invention may be prepared in any suitable manner. In particular the aluminium and fluoride contents of expressed tea juice may be adjusted by physically and/or chemically removing minerals from tea juice, for example by electrodialysis, ion exchange or other known methods. However, such methods are not especially selective and may remove minerals other than aluminium and fluoride and so negatively affect the taste or nutritional value of the tea juice. In addition it is preferable to provide the tea juice in as natural a state as possible and avoid any treatments which may appear artificial to a consumer

Thus we have sought processes for production of tea juice with low levels of aluminium and/or fluoride without having to remove ions from the juice following expression. To this end, the present invention provides a process comprising the steps of:
a) providing fresh tea material; and
b) expressing juice from the fresh tea material thereby to produce tea residue and tea juice;
wherein the fresh tea material comprises: at least 50% by weight of tea material harvested from tea plants pruned within 2 years before harvesting and/or greater than 1250 shoots per kg of the material.

The process is especially suited to manufacture of the beverage precursor composition of the invention.

### Early Harvested Tea Material

Surprisingly we have found that juice expressed from tea material harvested from tea plants pruned within 2 years before harvesting is low in aluminium and fluoride. Thus it is preferable that at least 50% by weight of the tea material is harvested from tea plants pruned within 2 years before harvesting (termed "early harvested" tea material hereafter). More preferably at least 75% by weight of tea material is early harvested tea material and most preferably from 90 to 100%. Additionally or alternatively the early harvested tea material is preferably harvested from tea plants pruned within 18 months before harvesting, most preferably within 3 to 12 months.

Pruning is commonly practiced in tea plantations. Pruning refers to cutting of the branches of matured tea bush manually or mechanically (e.g. by hard knife or by high speed rotating disk) at a predetermined height.

Generally there are five types of pruning which are carried out at different heights of the tea bush. Rejuvenation pruning is generally done at a height of less than 30 cm from the ground, hard pruning is done typically at a height of 30-45 cm from the ground, medium pruning at a height of 45-60 cm from the ground, light pruning at a height of 60-65 cm from the ground and skiffing is generally at a height of greater than 65 cm from the ground. It is important to mention here that the mature tea plant in plantation is typically 80-90 cm height from the ground. This level is maintained by regular plucking.

Pruning is usually carried out in tea plantation for the following reasons: (a) to maintain a convenient height for plucking (b) to induce more vegetative growth (c) to minimize banji formation (d) to control the crop during rush periods (e) to achieve better crop distribution (f) to economize plucking costs (g) to remove dead and defunct wood (h) to develop new frame (i) to remove knots and interlocked branches (j) to rejuvenate the overall tea bush. Rejuvenation pruning is generally carried out in a field where 50% of the primary branches are affected by wood rot/canker. Tea bushes are normally rested for about 6 weeks prior to pruning. Hard pruning is carried out for the proper spread of bushes, whenever the secondary branches are weak and knotty. Medium and light pruning is carried out when the bush frames are healthy. Skiffing is normally carried out to postpone pruning and for better frame development.

The length of the pruning cycle depends on the altitude of the garden, yield trend and plucker utilization. Commonly one quarter of the plantation is recommended to be pruned for a sustainable tea crop during the year. Prior to pruning, tea bushes should have adequate starch reserves for quick recovery of bushes. After pruning, it typically takes 3-4 months for the tea bush for complete rejuvenation and be ready for commercial plucking which is carried out generally at a height greater than 75 cm from the ground.

### Light Tea Material

When tea is harvested, it is picked as shoots with each shoot comprising an active growing bud, e.g. in the form of the first two, three, or four leaves together with the unopened bud (e.g., so-called "two-and-a-bud" and/or "three-and-a-bud" material).

We have now found that novel tea juices with low levels of aluminium and /or fluoride can be obtained by selectively pressing tea material which has a high amount of shoots per unit mass.

The weight of an individual tea shoot will depend, amongst other things, upon the pluck standard (e.g., whether two leaves are taken with each bud, whether three leaves are taken or whether more are taken), the variety of the tea (var. *assamica* typically has larger leaves than var. *sinensis*) and the age of the shoot. However we have found that for a wide range of harvests which varied in pluck standard, clonal variety and/or age, material having greater than 1250 shoots per kg produced juices with low levels of aluminium and/or fluoride. Preferably the tea material has at least 1300 shoots per kg and most preferably from 1400-1800 shoots per kg.

### Expressing Juice

The tea juice for use in the present invention is expressed from the fresh tea material. The expression step also produces tea residue which is separated from the tea juice, e.g. by filtering and/or centrifugation.

If the amount of juice expressed is too low then it becomes difficult to separate the juice from the residue and/or leads to an inefficient process. Thus it is preferred that the amount of expressed juice is at least 10 ml per kg of the fresh tea material, more preferably at least 25 ml, more preferably still at least 50 ml and most preferably from 75 to 600 ml. When referring to the volume of juice expressed per unit mass of tea material it should be noted that the mass of the tea material is expressed on an "as is" basis and not a dry weight basis. Thus the mass includes any moisture in the material.

The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof.

The juice may be obtained from the fresh material in a single pressing or in multiple pressings of the fresh material. Preferably the juice is obtained from a single pressing as this allows for a simple and rapid process.

In order to minimise degradation of the valuable tea compounds, it is preferred that the expression step is performed at ambient temperature. For example, the temperature of the tea material may be from 5 to 40 °C, more preferably 10 to 30 °C.

The time and pressure used in the expression step can be varied to yield the required amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea material may undergo a pre-treatment including, for example, a unit process selected from heat treatment to deactivate fermentation enzymes, maceration, withering, fermentation or a combination thereof.

If green tea juice is desired it is preferred that the fresh material is heat-treated to deactivate fermentation enzymes prior to expression. Suitable heat treatments include steaming and/or pan-firing.

If black or oolong tea juice is desired it is preferred that the fresh material is not heat-treated to deactivate fermentation enzymes prior to expression. The fresh material may or may not be fermented prior to expression. If the material is fermented prior to expression then it is particularly preferred that it is macerated prior to fermentation.

The tea residue may itself be processed to provide a vendible tea product. In particular, the tea residue is preferably processed to provide leaf tea.

### EXAMPLES

The present invention will be further described with reference to the following non-limiting examples.

### Example 1

This Example reports an initial experiment to investigate various parameters of tea material on the Aluminium content of the juice expressed from the material.

### Harvesting Tea Material

Tea was harvested from a plantation in Kenya. The parameters varied were as follows:
Pluck standard - Tea was harvested by instructing the pickers to pluck to a normal standard or to a fine pluck standard wherein the fine pluck standard required taking shoots consisting of one or two leaves and a bud.
Bush origin - Tea was harvested either exclusively from bushes grown from seedlings or bushes grown from an identical clone.
Stage after pruning - Tea was harvested exclusively from bushes which had been pruned within the same year, the year before or four years before.

### Processing the tea material

Some of the fresh tea material was chopped using a vegetable cutter (3 passes) and the resulting dhool was then pressed immediately (i.e. fermentation time of 0 hours).

The rest of the fresh tea material was chopped using a vegetable cutter (1 pass) before being fed through a CTC (cut, tear, curl) machine (Rollers set at six teeth per inch with speeds of 1000 and 100 rpm respectively) three times. The resulting dhool was then fermented for 2 hours before pressing.

### Expressing Juice

Dhool was pressed using a hydraulic press (5 Tonnes applied to a 500 g mass of fermented leaf inside a cylinder of diameter 160 mm, resulting in a downward pressure of 354 psi (2.44 MPa)) to express tea juice. The tea juice was immediately frozen and stored at -20 °C. The juice was then thawed and centrifuged for 20 minutes (10000 g at 3°C). The supernatant was then filter-sterilised using a Nalgene™ filtration unit fitted with a 0.2 µm filter.

### Analysis

The various tea juices were analysed for tea solids content, aluminium content and fluoride content as follows:
Aluminium Analysis: Portions of each sample were digested in a mixture of high-purity nitric acid (Romil SpA) and hydrogen peroxide (Fisher Chemicals) in sealed Teflon vessels with microwave-assisted heating. Following digestion the samples were diluted to a known volume with 5% nitric acid in deionised water. The diluted samples were measured by ICP-AES using a certified aluminium standard for calibration.
Fluoride Analysis: Portions of each sample were oven-dried to a solid and 1 part by weight of the solid mixed with 25 parts by weight of 0.15 M HClO₄ in deionised water. The resulting mixture was then heated at 100 °C for 30 minutes before filtering and cooling to 20 °C. Following hydrolysis the samples were diluted with a buffer. The diluted samples were measured using a fluoride ion-selective electrode with a doped lanthanum fluoride detector membrane. The electrode was calibrated with buffer containing various known amounts of sodium fluoride.
Total Solids: A portion of each sample was taken and accurately weighed. The sample was then evaporated to dryness in an oven (103 °C for 16 hours) and the dry residue accurately weighed to determine the mass of tea solids.

### Results

Table 1 shows the composition of the various tea juices.

**TABLE 1**

| **Sample** | **Ferment time (hrs)** | **Bush Type** | **Year After Prune** | **Pluck Standard** | **Shoots per kg** | **Tea solids (%w/w)** | **Aluminium (mg per g solids)** |
|---|---|---|---|---|---|---|---|
| 1 | 0 | Seedling | 1 | Normal | 550 | 4.8 | 1.9 |
| 2 | 2 | Seedling | 1 | Normal | 550 | 7.1 | 2.1 |
| 3 | 0 | Clone | 2 | Normal | 1010 | 6.1 | 1.0 |
| 4 | 2 | Clone | 2 | Normal | 1010 | 7.3 | 1.4 |
| 5 | 0 | Seedling | 1 | Fine | 1100 | 3.8 | 1.5 |
| 6 | 2 | Seedling | 1 | Fine | 1100 | 6.3 | 1.5 |
| 7 | 0 | Seedling | 5 | Normal | 1210 | 5.8 | 1.4 |
| 8 | 2 | Seedling | 5 | Normal | 1210 | 7.9 | 2.0 |
| 9 | 0 | Clone | 5 | Normal | 1250 | 4.7 | 1.9 |
| 10 | 2 | Clone | 5 | Normal | 1250 | 6.3 | 2.2 |
| 11 | 0 | Clone | 2 | Fine | 1400 | 4.5 | 0.6 |
| 12 | 2 | Clone | 2 | Fine | 1400 | 6.6 | 0.8 |
| 13 | 0 | Clone | 5 | Fine | 1400 | 4.8 | 0.6 |
| 14 | 2 | Clone | 5 | Fine | 1400 | 6.0 | 0.7 |
| 15 | 0 | Seedling | 5 | Fine | 1550 | 5.5 | 0.8 |
| 16 | 2 | Seedling | 5 | Fine | 1550 | 7.2 | 1.0 |

This data shows that regardless of bush type, year after pruning, pluck standard or fermentation time, juices made from harvests where the number of shoots per kilo is greater than 1250 have the lowest amount of aluminium in the tea solids. In addition, this data shows that material harvested over 2 years from pruning can produce juices having very high levels of aluminium (e.g. sample 10 has an aluminium content of 2.2 mg per g of solids).

### Example 2

This Example reports a larger scale experiment to further investigate the parameters reported in Example 1.

### Harvesting Tea Material

Tea was harvested in a similar manner as described in Example 1.

### Processing the tea material

Each batch of fresh tea material was chopped using a vegetable cutter (1 pass) before being fed through a rotorvane, a first CTC machine (Rollers set at four teeth per inch) and then a second CTC machine (Rollers set at six teeth per inch). The fresh dhool was then either pressed immediately (i.e. fermentation time of 0 hours) or fermented for 2 hours before pressing.

### Expressing Juice

Dhool was pressed using a screw press (model CP4 manufactured by the Vincent Corporation) to express tea juice. The tea juice was immediately frozen and stored at -20 °C. The juice was then thawed and centrifuged for 20 minutes (10000 g at 3°C). The supernatant was then filter-sterilised using a Nalgene™ filtration unit fitted with a 0.2 µm filter.

### Analysis

The analysis was the same as for Example 1.

### Results

Table 2 shows the composition of the various tea juices. The last column in this table indicates the aluminium content of a beverage (mg per litre) prepared by diluting each juice to 0.35% tea solids.

**TABLE 2**

| **Sample** | **Ferment time (hrs)** | **Bush Type** | **Year After Prune** | **Pluck Standard** | **Shoots per kg** | **Tea Solids (%w/w)** | **Aluminium (mg per g solids)** | **Aluminium at 0.35% solids (ppm)** |
|---|---|---|---|---|---|---|---|---|
| 17 | 0 | Clone | 1 | Normal | 820 | 8.7 | 1.7 | 6.0 |
| 18 | 2 | Clone | 1 | Normal | 820 | 7.9 | 1.9 | 6.6 |
| 19 | 0 | Seedling | 5 | Normal | 950 | 11.3 | 1.8 | 6.2 |
| 20 | 2 | Seedling | 5 | Normal | 950 | 9.8 | 2.3 | 8.2 |
| 21 | 0 | Clone | 1 | Normal | 1040 | 8.6 | 0.7 | 2.5 |
| 22 | 2 | Clone | 1 | Normal | 1040 | 7.5 | 1.2 | 4.0 |
| 23 | 0 | Clone | 1 | Normal | 1070 | 8.9 | 1.2 | 4.3 |
| 24 | 2 | Clone | 1 | Normal | 1070 | 7.8 | 2.0 | 7.2 |
| 25 | 0 | Clone | 5 | Normal | 1160 | 6.5 | 2.3 | 8.1 |
| 26 | 2 | Clone | 5 | Normal | 1160 | 7.4 | 3.4 | 11.8 |
| 27 | 0 | Seedling | 1 | Normal | 1250 | 9.3 | 0.7 | 2.5 |
| 28 | 2 | Seedling | 1 | Normal | 1250 | 6.7 | 1.3 | 4.5 |
| 29 | 0 | Clone | 5 | Normal | 1270 | 8.9 | 1.5 | 5.1 |
| 30 | 2 | Clone | 5 | Normal | 1270 | 8.6 | 1.9 | 6.5 |
| 31 | 0 | Clone | 1 | Fine | 1270 | 7.8 | 0.7 | 2.5 |
| 32 | 2 | Clone | 1 | Fine | 1270 | 6.4 | 1.3 | 4.5 |
| 33 | 0 | Seedling | 5 | Fine | 1360 | 16.5 | 1.2 | 4.0 |
| 34 | 2 | Seedling | 5 | Fine | 1360 | 12.4 | 1.9 | 6.8 |
| 35 | 0 | Clone | 5 | Fine | 1380 | 9.1 | 0.8 | 2.8 |
| 36 | 2 | Clone | 5 | Fine | 1380 | 7.6 | 1.2 | 4.1 |
| 37 | 0 | Clone | 5 | Fine | 1430 | 8.1 | 1.2 | 4.3 |
| 38 | 2 | Clone | 5 | Fine | 1430 | 6.2 | 1.9 | 6.8 |
| 39 | 0 | Clone | 1 | Fine | 1600 | 9.8 | 0.6 | 2.3 |
| 40 | 2 | Clone | 1 | Fine | 1600 | 6.5 | 1.2 | 4.3 |
| 41 | 2 | Seedling | 1 | Fine | 1610 | 16.3 | 0.4 | 1.5 |
| 42 | 0 | Seedling | 1 | Fine | 1610 | 9.8 | 0.5 | 1.6 |

This table demonstrates that all juices made from material harvested with more than 1250 shoots per kilo are suitable for diluting to make beverages having less than 8 ppm aluminium even at a tea solids content of 0.35 wt%. Furthermore, the data in this table demonstrates that all juices made from material harvested within the first year after pruning are also suitable for diluting to make beverages having less than 8 ppm aluminium even at a tea solids content of 0.35 wt%.

Table 3 shows the total aluminium and fluoride contents of the juices.

**TABLE 3**

| **Sample** | **(A) Aluminium (ppm)** | **(B) Fluoride (ppm)** | **(A)/(B)** |
|---|---|---|---|
| 17 | 150 | 110 | 1.36 |
| 18 | 150 | 120 | 1.25 |
| 19 | 200 | 163 | 1.23 |
| 20 | 230 | 189 | 1.22 |
| 21 | 61 | 46 | 1.33 |
| 22 | 86 | 65 | 1.32 |
| 23 | 110 | 85 | 1.29 |
| 24 | 160 | 120 | 1.33 |
| 25 | 150 | 118 | 1.27 |
| 26 | 250 | 193 | 1.30 |
| 27 | 66 | 48 | 1.38 |
| 28 | 87 | 62 | 1.40 |
| 29 | 130 | 105 | 1.24 |
| 30 | 160 | 110 | 1.45 |
| 31 | 56 | 64 | 0.88 |
| 32 | 82 | 73 | 1.12 |
| 33 | 190 | 157 | 1.21 |
| 34 | 240 | 215 | 1.12 |
| 35 | 73 | 60 | 1.22 |
| 36 | 88 | 65 | 1.35 |
| 37 | 100 | 72 | 1.39 |
| 38 | 120 | 87 | 1.38 |
| 39 | 63 | 62 | 1.02 |
| 40 | 80 | 47 | 1.70 |
| 41 | 69 | 63 | 1.10 |
| 42 | 46 | 39 | 1.18 |

This table demonstrates that there is a high degree of correlation between total aluminium and fluoride contents of expressed tea juice.

### Example 3

This Example demonstrates preparation of a beverage according to the invention.

10 g of the tea juice of sample 40 in Example 2 is taken and added to 190 ml of freshly boiled water. The resulting black tea beverage has a fresh taste, contains 0.33 wt% tea solids, has a total aluminium content of 3.9 ppm and a total fluoride content of 2.3 ppm.

A comparative beverage is prepared by using 10 g of the tea juice of sample 26 in Example 2 in place of the juice of sample 40. The resulting black tea beverage has a fresh taste and contains 0.37 wt% tea solids. However this beverage has a total aluminium content of 12.6 ppm and a total fluoride content of 9.7 ppm.

## Claims

1. A tea-based beverage comprising expressed tea juice, wherein the beverage has a total aluminium content of less than 8 ppm; a total fluoride content of less than 8 ppm; or both.

2. The tea-based beverage as claimed in claim 1, wherein the beverage has both a total aluminium content of less than 6 ppm and a total fluoride content of less than 6 ppm.

3. The tea-based beverage as claimed in claim 1 or claim 2, wherein the beverage has a total aluminium content of from 0.1 to 6 ppm.

4. The tea-based beverage as claimed in any one of the preceding claims, wherein the beverage has a total fluoride content of from 0.1 to 6 ppm.

5. The tea-based beverage as claimed in any one of the preceding claims, wherein the beverage comprises tea solids in a total amount of from 0.2 to 1% by weight of the beverage.

6. A beverage precursor composition for diluting to prepare the beverage as claimed in any one of claims 1 to 5, wherein the composition comprises expressed tea juice, has a total tea solids content of at least 4% by weight of the composition, and wherein the composition has a total aluminium content of less than 150 ppm; a total fluoride content of less than 150 ppm; or both.

7. The beverage precursor composition as claimed in claim 6 which is a liquid.

8. The beverage precursor composition as claimed in claim 7, wherein the composition has a total tea solids content of less than 20% by weight of the composition.

9. The tea-based beverage or beverage precursor composition as claimed in any one of the preceding claims, wherein the ratio of the total aluminium content to the total amount of tea solids is less than 2.2 mg aluminium per g of tea solids, preferably from 0.3 to 2.0 mg per g.

10. The tea-based beverage or beverage precursor composition as claimed in any one of the preceding claims, wherein the weight ratio of the total aluminium content to the total fluoride content is between 3:1 to 1:3, preferably in the range 2:1 to 1:2.

11. The tea-based beverage or beverage precursor composition as claimed in any one of the preceding claims, wherein at least 50% by weight of the tea solids are provided by the expressed tea juice, more preferably from 75 to 100%.

12. The tea-based beverage or beverage precursor composition as claimed in any one of the preceding claims, wherein the tea solids comprise theaflavins, the theaflavins comprise theaflavin (TF1) and theaflavin digallate (TF4) and the weight ratio (TF1/TF4) of theaflavin to theaflavin digallate is at least 2.0.

13. The tea-based beverage or beverage precursor composition as claimed in any one of claims 1 to 11, wherein the tea solids comprise catechins, the catechins comprise gallated and non-gallated catechins and the weight ratio of non-gallated catechins to gallated catechins is greater than 1.4:1

14. A process comprising the steps of:
a) providing fresh tea material; and
b) expressing juice from the fresh tea material thereby to produce tea residue and tea juice;
wherein the fresh tea material comprises: at least 50% by weight of tea material harvested from tea plants pruned within 2 years before harvesting; greater than 1250 shoots per kg of the material; or both.

15. The process as claimed in claim 14 wherein the moisture content of the fresh tea material subjected to the expression step is less than 90% by weight of the fresh tea material.

## Patentansprüche

1. Getränk auf Teebasis, umfassend ausgepressten Teesaft,
wobei das Getränk einen Gesamtgehalt an Aluminium von weniger als 8 ppm, einen Gesamtgehalt an Fluorid von weniger als 8 ppm oder beides aufweist.

2. Getränk auf Teebasis nach Anspruch 1,
wobei das Getränk sowohl einen Gesamtgehalt an Aluminium von weniger als 6 ppm als auch einen Gesamtgehalt an Fluorid von weniger als 6 ppm aufweist.

3. Getränk auf Teebasis nach Anspruch 1 oder 2,
wobei das Getränk einen Gesamtgehalt an Aluminium von 0,1 bis 6 ppm aufweist.

4. Getränk auf Teebasis nach einem der vorstehenden Ansprüche,
wobei das Getränk einen Gesamtgehalt an Fluorid von 0,1 bis 6 ppm aufweist.

5. Getränk auf Teebasis nach einem der vorstehenden Ansprüche,
wobei das Getränk Teefeststoffe in einer Gesamtmenge von 0,2 bis 1 Gew.-% des Getränks aufweist.

6. Zusammensetzung in Form einer Vorstufe eines Getränks zum Verdünnen, um das Getränk nach einem der Ansprüche 1 bis 5 herzustellen,
wobei die Zusammensetzung ausgepressten Teesaft umfasst, einen Gesamtgehalt an Teefeststoffen von mindestens 4 Gew.-% der Zusammensetzung aufweist und wobei die Zusammensetzung einen Gesamtgehalt an Aluminium von weniger als 150 ppm, einen Gesamtgehalt an Fluorid von weniger als 150 ppm oder beides aufweist.

7. Zusammensetzung in Form einer Vorstufe eines Getränks nach Anspruch 6,
die eine Flüssigkeit ist.

8. Zusammensetzung in Form einer Vorstufe eines Getränks nach Anspruch 7,
wobei die Zusammensetzung einen Gesamtgehalt an Teefeststoffen von weniger als 20 Gew.-% der Zusammensetzung aufweist.

9. Getränk auf Teebasis oder Zusammensetzung in Form einer Vorstufe eines Getränks nach einem der vorstehenden Ansprüche,
wobei das Verhältnis zwischen dem Gesamtgehalt an Aluminium und der Gesamtmenge an Teefeststoffen weniger als 2,2 mg Aluminium pro g Teefeststoffe, vorzugsweise 0,3 bis 2,0 mg pro g beträgt.

10. Getränk auf Teebasis oder Zusammensetzung in Form einer Vorstufe eines Getränks nach einem der vorstehenden Ansprüche,
wobei das Gewichtsverhältnis zwischen dem Gesamtgehalt an Aluminium und dem Gesamtgehalt an Fluorid 3:1 bis 1:3 beträgt, vorzugsweise im Bereich von 2:1 bis 1:2 liegt.

11. Getränk auf Teebasis oder Zusammensetzung in Form einer Vorstufe eines Getränks nach einem der vorstehenden Ansprüche,
wobei mindestens 50 Gew.-% der Teefeststoffe, stärker bevorzugt 75 bis 100 %, vom ausgepressten Teesaft bereitgestellt werden.

12. Getränk auf Teebasis oder Zusammensetzung in Form einer Vorstufe eines Getränks nach einem der vorstehenden Ansprüche,
wobei die Teefeststoffe Theaflavine umfassen, wobei die Theaflavine Theaflavin (TF11) und Theaflavindigallat (TF4) umfassen und das Gewichtsverhältnis (TF1/TF4) von Theaflavin zu Theaflavindigallat mindestens 2,0 beträgt.

13. Getränk auf Teebasis oder Zusammensetzung in Form einer Vorstufe eines Getränks nach einem Ansprüche 1 bis 11,
wobei die Teefeststoffe Catechine umfassen, wobei die Catechine mit Gallussäure umgesetzte und nicht mit Gallussäure umgesetzte Catechine umfassen und das Gewichtsverhältnis von nicht mit Gallussäure umgesetzten Catechinen zu mit Gallussäure umgesetzten Catechinen mehr als 1,4:1 beträgt.

14. Verfahren, das die folgenden Schritte aufweist:
a) Bereitstellen von frischem Teematerial; und
b) Auspressen von Saft aus dem frischen Teematerial, wodurch ein Teerückstand und Teesaft erzeugt wird;
wobei das frische Teematerial umfasst: mindestens 50 Gew.-% Teematerial, das von Teepflanzen geerntet wurde, die innerhalb von 2 Jahren vor der Ernte zugeschnitten wurden, mehr als 1250 Triebspitzen pro kg des Materials, oder beides.

15. Verfahren nach Anspruch 14,
wobei der Feuchtigkeitsgehalt des frischen Teematerials, das dem Auspressschritt unterzogen wird, weniger als 90 Gew.-% des frischen Teematerials beträgt.

## Revendications

1. Boisson à base de thé comprenant du jus de thé exprimé, dans laquelle la boisson présente une teneur totale en aluminium inférieure à 8 ppm ; une teneur totale en fluorure inférieure à 8 ppm ; ou les deux.

2. Boisson à base de thé selon la revendication 1, dans laquelle la boisson présente à la fois une teneur totale en aluminium inférieure à 6 ppm et une teneur totale en fluor inférieure à 6 ppm.

3. Boisson à base de thé selon la revendication 1 ou la revendication 2, dans laquelle la boisson présente une teneur totale en aluminium de 0,1 à 6 ppm.

4. Boisson à base de thé selon l'une quelconque des revendications précédentes, dans laquelle la boisson présente une teneur totale en fluor de 0,1 à 6 ppm.

5. Boisson à base de thé selon l'une quelconque des revendications précédentes, dans laquelle la boisson comprend des matières solides de thé dans une quantité totale de 0,2 à 1 % en masse de la boisson.

6. Composition de précurseur de boisson pour une dilution afin de préparer la boisson selon l'une quelconque des revendications 1 à 5, dans laquelle la composition comprend du jus de thé exprimé, présente une teneur totale en matières solides d'au moins 4 % en masse de la composition, et dans laquelle la composition présente une teneur totale en aluminium inférieure à 150 ppm ; une teneur totale en fluorure inférieure à 150 ppm ; ou les deux.

7. Composition de précurseur de boisson selon la revendication 6, laquelle est un liquide.

8. Composition de précurseur de boisson selon la revendication 7, dans laquelle la composition présente une teneur totale en matières solides de thé inférieure à 20 % en masse de la composition.

9. Boisson à base de thé et composition de précurseur de boisson selon l'une quelconque des revendications précédentes, dans laquelle le rapport de la teneur totale en aluminium à la teneur totale des matières solides de thé est inférieure à 2,2 mg d'aluminium par g de matières solides de thé, de préférence de 0,3 à 2,0 mg par g.

10. Boisson à base de thé ou composition de précurseur de boisson selon l'une quelconque des revendications précédentes, dans laquelle le rapport massique de la teneur totale en aluminium à la teneur totale en fluorure est de 3:1 à 1:3, de préférence dans l'intervalle de 2:1 à 1:2.

11. Boisson à base de thé ou composition de précurseur de boisson selon l'une quelconque des revendications précédentes, dans laquelle au moins 50 % en masse des matières solides de thé sont fournies par le jus de thé exprimé, encore mieux de 75 à 100 %.

12. Boisson à base de thé ou composition de précurseur de boisson selon l'une quelconque des revendications précédentes, dans laquelle les matières solides de thé comprennent des théflavines, les théflavines comprennent de la théaflavine (TF1) et du digallate de théaflavine (TF4) et le rapport massique (TF1/TF4) de théaflavine au digallate de théaflavine est d'au moins 2,0.

13. Boisson à base de thé ou composition de précurseur de boisson selon l'une quelconque des revendications 1 à 11, dans laquelle les matières solides de thé comprennent des catéchines, les catéchines comprennent des catéchines gallatées ou non gallatées et le rapport massique des catéchines non gallatées aux catéchines gallatées est supérieur à 1,4:1.

14. Procédé comprenant les étapes :
a) de fourniture d'une matière de thé fraîche ; et
b) d'expression de jus à partir de la matière de thé fraîche pour produire par-là un résidu de thé et du jus de thé ;
dans lequel la matière de thé fraîche comprend : au moins 50 % en masse de matière de thé récoltée à partir de plants de thé taillés dans les 2 ans avant la récolte ; plus de 1 250 pousses par kg de la matière ; ou les deux.

15. Procédé selon la revendication 14, dans lequel la teneur en humidité de la matière de thé fraîche soumise à l'étape d'expression est inférieure à 90 % en masse de la matière de thé fraîche.
